# FASCICULE DE BREVET EUROPEEN

(11) **EP 3 140 086 B1**
(45) Date de publication et mention de la délivrance du brevet: **20.06.2018**
(21) Numéro de dépôt: 15723460.0
(22) Date de dépôt: 07.05.2015
(51) Int. Cl.: B25J 19/00, F16F 1/377

(54) **DISPOSITIF AMORTISSEUR DE CHOCS POUR UN ROBOT HUMANOIDE**
STOSSABSORBIERENDE VORRICHTUNG FÜR EINEN HUMANOIDEN ROBOTER
SHOCK-ABSORBING DEVICE FOR A HUMANOID ROBOT

(30) Priorité: 07.05.2014 FR 1454161
(43) Date de publication de la demande: 15.03.2017
(73) Titulaire: Softbank Robotics Europe, 75015 Paris (FR)
(72) Inventeur: CLERC, Vincent, 92140 Clamart (FR); TESSIER, Ludovic, 75015 Paris (FR); MUGNIER, Fabien, 75015 Paris (FR)
(74) Mandataire: Collet, Alain
(86) Numéro de dépôt international: PCT/EP2015/060046
(87) Numéro de publication internationale: WO 2015/169894

(56) Documents cités:
- JP-A- 2003 145 476
- JP-A- 2003 266 363
- US-A- 5 204 998
- US-A1- 2011 047 678

## Description

La présente invention concerne de façon générale un dispositif amortisseur de chocs, en particulier de sécurisation et de protection d'une électronique contre les chocs par exemple liés à une chute d'un appareil contenant cette électronique (cartes, composants...). L'invention trouve une utilité particulière pour la protection de l'électronique embarquée dans des robots humanoïdes contre les chutes dudit robot, celles-ci étant un évènement particulièrement pénalisant pour le développement des usages de ces robots.

Un robot peut être qualifié d'humanoïde à partir du moment où il possède certains attributs de l'apparence et des fonctionnalités de l'homme : une tête, un tronc, deux bras, deux mains, deux jambes ou deux pieds. Des robots humanoïdes sont capables de marcher, de faire des gestes, avec les membres ou avec la tête. La complexité des gestes qu'ils sont capables d'effectuer augmente sans cesse. Malgré ces progrès, les robots humanoïdes restent susceptibles de chuter. Ces chutes peuvent avoir lieu lors des essais de mise au point du robot, mais également dans une phase ultérieure d'utilisation du robot, en raison des inévitables obstacles ou interventions extérieures. Pour permettre une application dans le grand public, les robots humanoïdes doivent pouvoir supporter de telles chutes de manière répétée.

Une difficulté particulière provient de la position relativement élevée du centre de gravité d'un robot humanoïde. Par exemple lorsqu'un robot d'une taille de 70 cm chute, la décélération subie par les composants de la tête heurtant le sol peut atteindre des valeurs de l'ordre de 70G. Ces chutes non désirées mais inévitables sont susceptibles dans les robots actuels d'endommager les composants fragiles, tels que l'électronique ou les capteurs et actionneurs.

Dans une approche connue, on a tenté de contourner cette difficulté en abaissant le centre de gravité. On connait par exemple un robot dont la partie inférieure en forme de jupe héberge les équipements les plus lourds. Cette approche a toutefois pour inconvénient de limiter les mouvements et fonctionnalités de la partie supérieure du robot, en particulier des bras et de la tête. Pour améliorer la résistance du robot aux chutes, on a aussi envisagé des mécanismes de protection configurés pour se déclencher lorsqu'une chute du robot est détectée. Cette approche présent aussi des limites, en particulier le déclenchement intempestif du mécanisme de protection lors des mouvements du robot.

Il reste donc désirable de disposer de solutions pour améliorer la résistance mécanique des robots humanoïdes, et leur permettre de supporter des chocs répétés contre celle-ci. Bien entendu, une telle solution doit pouvoir s'insérer dans l'environnement fonctionnel et structurel du robot.

Le document JP2003145476, considéré comme le document de l'art antérieur le plus pertinent, décrit une tête de robot canin avec un élément amortissant muni d'alvéoles débouchantes.

A cet effet, l'invention a pour objet un dispositif amortisseur de chocs pour un robot mobile, le dispositif comprenant :
- une structure rigide destinée à être reliée au robot humanoïde,
- une coquille extérieure déformable, et
- un amortisseur ;
l'amortisseur étant constitué d'une structure alvéolaire souple comprenant un ensemble d'alvéoles débouchantes selon une direction principale, et étant solidaire de la structure rigide en une première extrémité selon la direction principale, et relié à la coquille extérieure déformable en une seconde extrémité opposée à la première selon la direction principale.

Avantageusement, la coquille extérieure est également reliée directement à la structure rigide au moyen d'au moins une fixation absorbante de type silentbloc.

Avantageusement, l'amortisseur comprend un plan de joint sensiblement perpendiculaire à la direction principale ; la structure alvéolaire de l'amortisseur étant configurée de façon à ce que les alvéoles se referment en s'éloignant du plan de joint selon la direction principale.

Avantageusement, l'amortisseur est constitué d'un matériau choisi dans la liste comprenant le caoutchouc naturel, le 4-polyisoprène, le polyisoprène synthétique, le polybutadiène, le copolymère styrène-butadiène, le polyisobutylène, l'isobutylène-isoprène, le chloroprène, le néoprène, le copolymère butadiène-acrylonitrile, le copolymère éthylène-propylène, le terpolymère, le polyéther bloc amide, les thermo-plastiques élastomères, les polyuréthanes thermoplastiques, les oléfines thermoplastiques, les polysulfures, la protéine élastine, les élastomères silicone, les fluoroélastomères, les perfluoroélastomères, le copolymère éthylène-acétate de vinyle, les élastomères polyacryliques, le copolymère éthylène acrylique, le polyéthylène chlorosulfoné, les élastomères d'épichlorhydrine. Selon l'invention , le dispositif comprend un module électronique fixé sur la structure rigide, et dont l'amortisseur comprend une cheminée débouchante en deux extrémités selon la direction principale, permettant d'évacuer de la chaleur émise par le module électronique vers l'extérieur du robot.

Avantageusement, le dispositif comprend un ventilateur fixé sur l'amortisseur, et apte à générer un flux d'air à proximité du module électronique et au travers de la cheminée.

Avantageusement, le dispositif comprend au moins une source lumineuse reliée à la structure rigide ; l'amortisseur comprenant un conduit débouchant configuré pour guider une lumière émise par la source lumineuse vers l'extérieur du robot.

Avantageusement, le dispositif comprend au moins une source sonore reliée à la structure rigide ; l'amortisseur comprenant un conduit débouchant configuré pour guider une onde sonore émise par la source sonore vers l'extérieur du robot.

Avantageusement, le dispositif comprend au moins un microphone fixé à une paroi interne de la coquille extérieure ; l'amortisseur permettant l'isolation phonique.

L'invention porte aussi sur un robot humanoïde comprenant un dispositif amortisseur de chocs ayant les caractéristiques précédemment décrites.

L'invention porte également sur une tête d'un robot humanoïde comprenant un dispositif amortisseur de chocs, et dont la structure rigide est reliée à un tronc du robot. Avantageusement, la tête comprend un premier dispositif amortisseur disposé en partie avant de la tête, et un second dispositif amortisseur disposé en partie arrière de la tête ; les deux dispositifs amortisseurs étant placés en regard l'un de l'autre selon la direction la direction principale et de part et d'autre d'une structure rigide commune aux deux dispositifs amortisseurs.

L'invention porte enfin sur un torse de robot humanoïde, comprenant un premier dispositif amortisseur disposé en partie avant du robot humanoïde, et un second dispositif amortisseur disposé en partie arrière du robot ; les deux dispositifs amortisseurs étant placés en regard l'un de l'autre selon la direction la direction principale et de part et d'autre d'une structure rigide commune aux deux dispositifs amortisseurs.

L'invention sera mieux comprise et d'autres avantages apparaîtront à la lecture de la description détaillée d'un mode de réalisation donné à titre d'exemple sur les figures suivantes.
Les figures 1a et 1b représentent deux exemples de robots humanoïdes développés par la demanderesse,
Les figures 2a et 2b représentent, respectivement en perspective et en vue de dessus, un exemple de tête d'un robot humanoïde comprenant un dispositif amortisseur selon l'invention,
la figure 3 représente en vue éclatée un dispositif amortisseur avant et un dispositif amortisseur arrière reliés à une colonne porteuse de la tête du robot humanoïde,
la figure 4 représente selon trois vues un amortisseur du dispositif avant et un amortisseur du dispositif arrière,
les figures 5a et 5b représentent selon trois vues l'amortisseur, respectivement du dispositif avant et du dispositif arrière.

Par souci de clarté, les mêmes éléments porteront les mêmes repères dans les différentes figures.

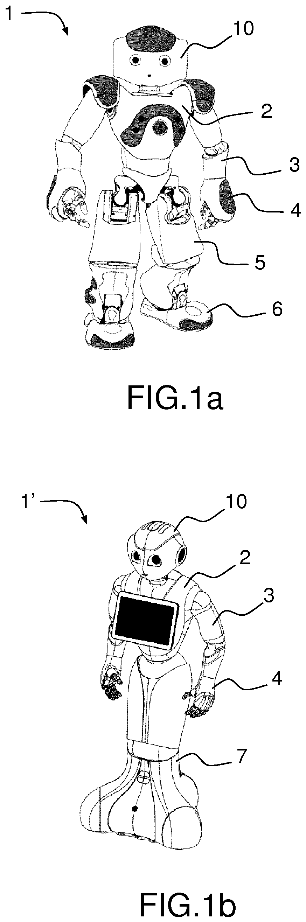

Les **figures 1a et 1b** représentent deux exemples de robots humanoïdes développés par la société ALDEBARAN ROBOTIC™. Le robot humanoïde 1 représenté en figure 1a comprend une tête 10, un tronc 2, deux bras 3, deux mains 4, deux jambes 5 et deux pieds 6. Le robot humanoïde 1' représenté en figure 1b comprend une tête 10, un tronc 2, deux bras 3, deux mains 4 et une jupe 7. Le dispositif amortisseur selon l'invention est destiné à protéger de tels exemples de robots humanoïdes des chocs, notamment en cas de chute du robot.

Le dispositif amortisseur selon l'invention est particulièrement adapté pour la protection de composants fragiles pouvant être hébergés dans la tête d'un robot humanoïde. Le mode de réalisation que nous allons décrire dans la suite concerne une tête de robot humanoïde munie de deux dispositifs amortisseurs de choc. Ce mode de réalisation permet efficacement de protéger des chutes la tête d'un robot de taille importante, par exemple de l'ordre de 70 cm ou plus. Il est néanmoins bien entendu que la présente invention ne se limite pas à cette réalisation particulière d'une tête de robot humanoïde munie de deux dispositifs amortisseurs. Il est au contraire entendu que l'invention porte de manière générale sur un dispositif amortisseur de choc, qui peut être mis en oeuvre, seul ou en combinaison, pour assurer la protection de la tête d'un robot humanoïde, ou de tout autre composant du robot humanoïde. Plus généralement, le dispositif peut être appliqué à un robot mobile comprenant au moins un membre inférieur articulé, au contact du sol, entrainant un risque de chute pour le robot. Dans le présent document, la dénomination de robot mobile signifie un robot comprenant au moins un membre inférieur, articulé par rapport à un tronc du robot autour d'au moins un degré de liberté en rotation.

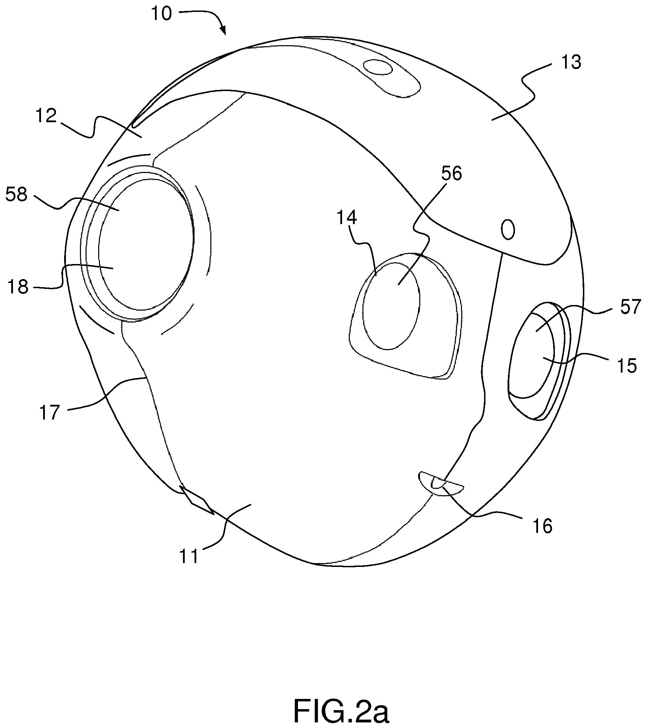

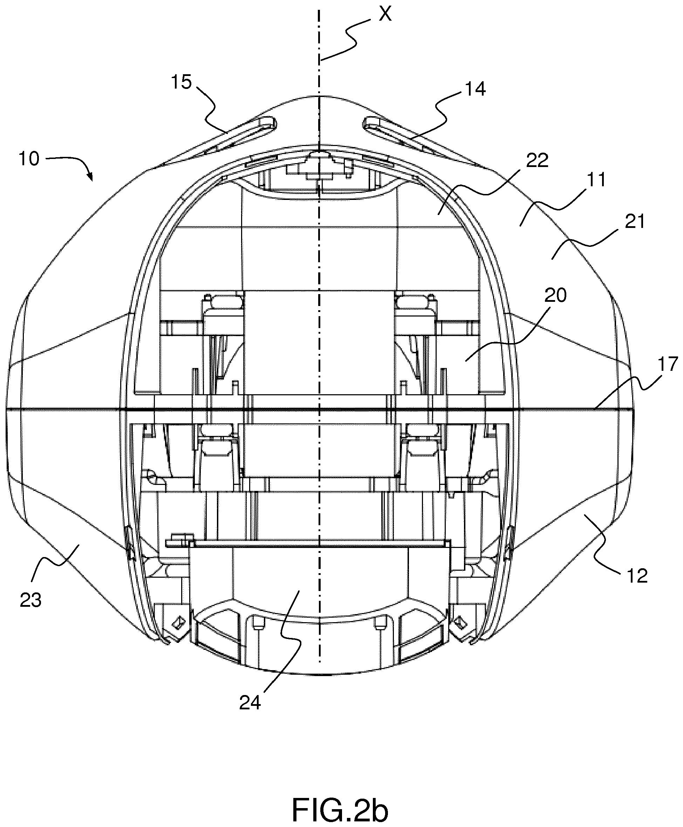

Les **figures 2a** **et** **2b** représentent, respectivement en perspective et en vue de dessus, un exemple de tête d'un robot humanoïde comprenant un dispositif amortisseur selon l'invention. Dans l'exemple, la tête 10 du robot humanoïde comprend un dispositif amortisseur avant 11, un dispositif amortisseur arrière 12 et une calotte supérieure 13. Dans le dispositif amortisseur avant 11 sont aménagés deux orifices latéraux 14 et 15 représentant les yeux du robot, et un orifice central 16 représentant la bouche du robot. Les dispositifs amortisseurs avant 11 et arrière 12 comprennent deux arrêtes communes latérales séparant entre la partie avant et la partie arrière du robot. L'arrête commune droite, référencée 17, est représentée sur les figures 2a et 2b. Dans chaque dispositif amortisseur, avant 11 et arrière 12, est aménagée le long de chacune des deux arrêtes latérales, une ouverture sensiblement en forme de demi-cercle. L'ouverture en demi-cercle du dispositif amortisseur avant vient en regard de l'ouverture en demi-cercle du dispositif amortisseur arrière, formant ainsi, le long des deux arrêtes communes latérales, une ouverture 18 sensiblement en forme de cercle représentant une oreille du robot.

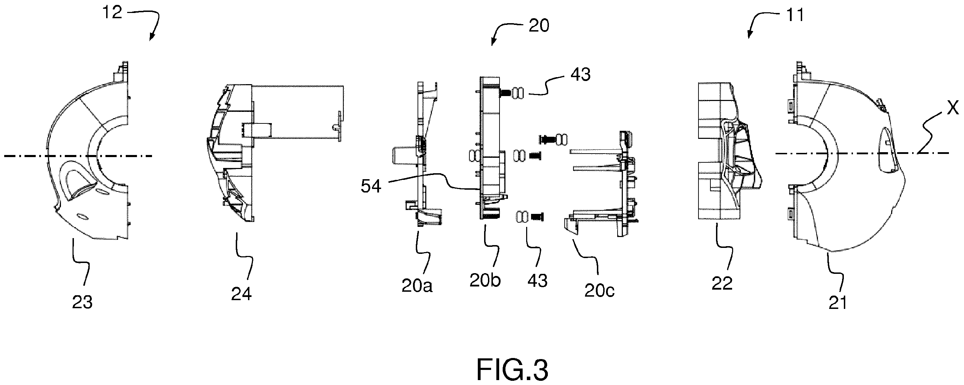

Sur la figure 2b, la calotte supérieure 13 n'est pas représentée de sorte que des composants à l'intérieur de la tête 10 du robot sont visibles. La tête 10 du robot est reliée au tronc 2 du robot au moyen d'une colonne porteuse rigide 20. La colonne porteuse peut être constituée d'un assemblage de plusieurs composants de structure, solidaires entre eux, comme décrit en figure 3. Ces composants peuvent être en matériau plastique rigide. Divers équipements tels qu'un module électronique, des capteurs et/ou des actionneurs peuvent être fixés sur la colonne porteuse.

Chaque dispositif amortisseur comprend une coquille extérieure déformable et un amortisseur. Le dispositif amortisseur avant 11 comprend une coquille extérieure 21 et un amortisseur 22. Le dispositif amortisseur arrière 12 comprend une coquille extérieure 23 et un amortisseur 24. Ces éléments sont décrits en détail dans la suite.

La **figure 3** représente en vue éclatée le dispositif amortisseur avant, le dispositif amortisseur arrière et la colonne porteuse. La colonne porteuse 20 est constituée d'un assemblage, ici représenté en vue éclatée, de composants de structure 20a, 20b et 20c. Après assemblage, ces composants forment la colonne porteuse 20 reliée au tronc du robot. Dans l'exemple représenté, la tête du robot est munie de deux dispositifs amortisseurs placés en regard l'un de l'autre, et de part et d'autre de la colonne porteuse. D'une manière générale, le dispositif amortisseur selon l'invention comprend une coquille extérieure déformable, un amortisseur et une structure rigide. Le dispositif amortisseur a pour but d'absorber et de dissiper l'énergie générée lors d'un choc, de manière à protéger des composants fragiles pouvant être fixés à la structure rigide. Dans l'exemple représenté, la colonne porteuse 20 constitue la structure rigide commune aux deux dispositifs amortisseurs 11 et 12. Ou autrement dit, la structure rigide de chacun des dispositifs amortisseurs est solidaire de la colonne porteuse assurant le maintien de la tête du robot par rapport à son tronc.

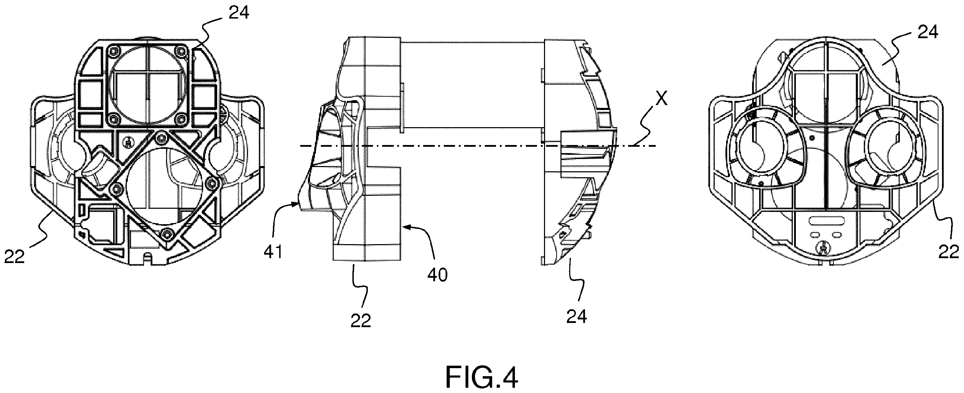

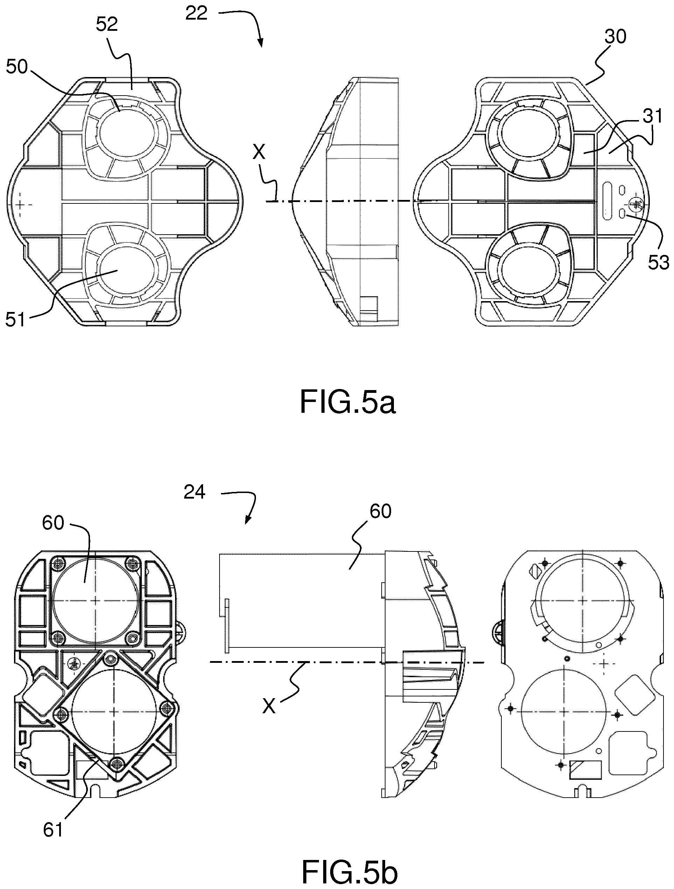

La **figure 4** représente selon trois vues les amortisseurs 22 et 24 des dispositifs amortisseurs avant 11 et arrière 12. Ces deux amortisseurs, respectivement l'amortisseur avant 22 et l'amortisseur arrière 24, sont aussi représentés selon trois vues, respectivement sur la **figure 5a** et la **figure 5b****.**

Dans l'exemple représenté, la tête du robot humanoïde comprend deux dispositifs amortisseurs. Le dispositif amortisseur selon l'invention est caractérisé en ce qu'il comprend une structure rigide 20 reliée au robot humanoïde, une coquille extérieure déformable et un amortisseur constitué d'une structure alvéolaire souple comprenant un ensemble d'alvéoles débouchantes selon une direction principale X. En outre, l'amortisseur est maintenu solidaire de la structure rigide en une première extrémité selon la direction principale X, et est relié à la coquille extérieure déformable en une seconde extrémité opposée à la première selon la direction principale X.

Divers matériaux sont envisagés pour la réalisation de la coquille extérieure déformable. Par exemple, un polystyrène peut être mis en oeuvre. Il est également envisagé d'appliquer un revêtement ou un traitement de surface sur la paroi externe de la coquille extérieure déformable pour en améliorer l'apparence ou le toucher.

L'amortisseur est constitué d'une structure alvéolaire souple comprenant un ensemble d'alvéoles débouchantes selon la direction principale X. En particulier, la structure alvéolaire de l'amortisseur avant 22 est représentée sur la figure 5a. La structure alvéolaire comprend une pluralité de parois 30 sensiblement parallèles à la direction principale. Les parois définissent l'ensemble d'alvéoles 31 débouchantes selon la direction principale. Divers matériaux capables d'une déformation élastique sont envisagés pour la réalisation de l'amortisseur. Le silicone, le polyuréthane ou des matières végétales de type éponge sont en particulier envisagés. Préférentiellement, l'amortisseur est constitué d'un matériau choisi dans une liste comprenant le caoutchouc naturel, le 4-polyisoprène, le polyisoprène synthétique, le polybutadiène, le copolymère styrène-butadiène, le polyisobutylène, l'isobutylène-isoprène, le chloroprène, le néoprène, le copolymère butadiène-acrylonitrile, le copolymère éthylène-propylène, le terpolymère, le polyéther bloc amide, les thermo-plastiques élastomères, les polyuréthanes thermoplastiques, les oléfines thermoplastiques, les polysulfures, la protéine élastine, les élastomères silicone, les fluoroélastomères, les perfluoroélastomères, le copolymère éthylène-acétate de vinyle, les élastomères polyacryliques, le copolymère éthylène acrylique, le polyéthylène chlorosulfoné, les élastomères d'épichlorhydrine.

L'amortisseur est solidaire de la colonne porteuse 20 en une première extrémité selon la direction principale, et relié à la coquille extérieure déformable en une seconde extrémité opposée à la première selon la direction principale. Sur la figure 4 sont représentées, pour le dispositif amortisseur avant 11, la première extrémité 40 solidaire de la colonne porteuse et la seconde extrémité 41 reliée à la coquille extérieure déformable 21. La première extrémité peut être rendue solidaire de la colonne porteuse par divers moyens de fixation, et en particulier par collage. De même, la seconde extrémité peut être reliée à la coquille extérieure déformable par divers moyens de liaison. Elle peut être notamment fixée à la coquille extérieure par collage.

Dans une mise en oeuvre particulière, l'amortisseur est maintenu sur la colonne porteuse par un simple emboitement, et assure le maintien de la coquille extérieure également par un simple emboitement. Dans cette mise en oeuvre, les coquilles extérieures des dispositifs amortisseurs avant et arrière peuvent être liées entre elle au niveau de leurs arrêtes communes latérales 17. Les coquilles extérieures étant simplement emboitées sur les amortisseurs, eux même emboités sur la colonne porteuse, les coquilles sont flottantes par rapport à la colonne porteuse.

Cette configuration d'un dispositif amortisseur constitué d'une coquille déformable et d'un amortisseur est particulièrement avantageuse pour protéger des composants sensibles fixés sur une structure rigide. Par exemple, lors d'une chute du robot, vers l'avant ou vers l'arrière, la tête heurte le sol selon une direction proche de la direction principale. La coquille extérieure absorbe partiellement le choc en se déformant, et le transmet partiellement à l'amortisseur. Le choc est ensuite absorbé par l'amortisseur en deux temps. Il entraine dans un premier temps une déformation par flambage des parois de la structure alvéolaire. Lors de cette déformation des parois perpendiculairement à la direction principale, une contrainte relativement faible est opposée. Puis dans un second temps, si le flambage des parois n'est pas suffisant pour absorber la totalité du choc, il est absorbé par déformation élastique du matériau élastique constituant l'amortisseur. Plus précisement, les différentes parois se retrouvent après flambage en appui les unes contre les autres et l'amortisseur se comporte alors en déformation élastique de façon sensiblement homogène.

Ainsi, les composants sensibles hébergés dans la tête du robot et fixés sur la colonne porteuse subissent une décélération plus progressive. L'onde de choc transmise de la coquille extérieure vers la colonne porteuse est sensiblement atténuée par les déformations successives de la coquille et de l'amortisseur.

Dans une mise en oeuvre avantageuse de la présente invention, la coquille extérieure d'un dispositif amortisseur peut également être reliée directement à la colonne porteuse au moyen d'au moins une fixation absorbante de type silentbloc. Comme représenté sur la figure 3, il est envisagé de fixer la coquille extérieure 21 du dispositif amortisseur avant 11 au moyen d'une pluralité de fixations absorbantes 43 de type silentbloc. Les fixations absorbantes 43 relient la colonne porteuse à la coquille extérieure au moyen de plusieurs blocs de matériau élastique capables d'absorber des chocs et des vibrations entre ces deux éléments. En cas de choc, ces fixations absorbantes se déforment donc simultanément à l'amortisseur et contribuent également à absorber le choc contre la coquille extérieure. Ainsi, cette configuration permet à des éléments saillants de la surface extérieure du robot, comme par exemple des traits du visage du robot, de se déformer, par déformation de la coquille extérieure et flambage des parois de l'amortisseur, sans contribuer à propager l'onde de choc vers la colonne porteuse. Le choc est absorbé et dissipé après cette première déformation, par les fixations absorbantes et par déformation élastique de l'amortisseur.

La structure alvéolaire de l'amortisseur offre une grande flexibilité de conception, et permet d'insérer avantageusement le dispositif amortisseur dans l'environnement structurel et fonctionnel du robot. Par exemple, la tête du robot peut comprendre une ou plusieurs sources lumineuses reliées à la colonne porteuse pour représenter les yeux du robot. L'amortisseur du dispositif amortisseur avant comprend alors un ou plusieurs conduits débouchants, référencés 50 et 51 sur la figure 5a, permettant de guider la lumière émise par la ou les sources de lumière vers l'extérieur de la tête du robot, par exemple au travers des orifices 14 et 15 représentés sur les figures 2a et 2b. Les conduits débouchants 50 et 51 sont solidaires par une extrémité à la colonne porteuse et par une seconde extrémité à la paroi interne de la coquille extérieure. Ils assurent une fonction de guide lumière. Avantageusement, ils permettent à la fois de concentrer la lumière émise par la source lumineuse et de protéger cette source en cas de choc.

La tête du robot peut aussi comprendre une ou plusieurs sources sonores 58 reliées à la colonne porteuse. Selon le même principe, l'amortisseur d'un dispositif amortisseur comprend alors un ou plusieurs conduits débouchants 52 permettant de guider une onde sonore émise par la ou les sources sonores vers l'extérieur de la tête du robot. Comme précédemment, ces conduits débouchants 52 peuvent être solidaires par une extrémité à la colonne porteuse et par une seconde extrémité à la paroi interne de la coquille extérieure, permettant à la fois de guider une onde sonore vers l'extérieur de la tête et de protéger la source sonore en cas de choc.

Il est également envisagé par la présente invention de fixer un microphone 53 à la paroi interne de la coquille extérieure d'un dispositif amortisseur. La coquille est reliée à la colonne porteuse par l'amortisseur et éventuellement par des fixations absorbantes, qui sont susceptibles d'absorber des chocs et des vibrations. La fixation du microphone sur la coquille extérieure déformable permet avantageusement de limiter le bruit résultant de vibrations, par exemple liées aux mouvements du robot.

Comme représenté sur les figures, la structure alvéolaire peut également être configurée pour assurer un refroidissement de la tête du robot. Pour évacuer la chaleur émise par des composants électroniques de la tête du robot, ou plus généralement la chaleur émise par un module électronique 54 fixé à la structure rigide du dispositif amortisseur, la structure alvéolaire de l'amortisseur est configuré pour définir une cheminée 60 débouchante en deux extrémités selon la direction principale, permettant d'évacuer de la chaleur émise par le module électronique vers l'extérieur du robot. Autrement dit, une des alvéoles de la structure alvéolaire forme la cheminée 60. En fonctionnement normal, la structure alvéolaire permet l'évacuation de la chaleur. En cas de choc, du fait du flambage de la structure alvéolaire, la transmission de la chaleur peut être interrompue. Cette interruption reste momentanée. En effet, la structure alvéolaire, travaillant dans son domaine élastique lors des chocs, reprend sa forme originale dès que le choc se termine et reprend également sa fonction de transmission de la chaleur au travers de la cheminée 60.

Sur la figure 5b est représentée une cheminée 60 aménagée dans l'amortisseur 24 du dispositif amortisseur arrière 12. Le dispositif amortisseur peut comprendre un ventilateur fixé sur l'amortisseur permettant de générer un flux d'air à proximité du module électronique et au travers de la cheminée 60. A cet effet, l'amortisseur 24 comprend une empreinte 61 configurée pour recevoir le ventilateur et des moyens de fixations en quatre coins de la base du ventilateur. La fixation du ventilateur sur l'amortisseur est aussi très avantageuse car elle permet de s'affranchir des bruits et vibrations liés à la rotation des pales du ventilateur susceptibles d'être transmis aux composants fixés sur la colonne porteuse.

Dans l'exemple représenté sur les figures, la cheminée et le ventilateur sont aménagés sur le même dispositif amortisseur, le dispositif amortisseur arrière. Il est aussi envisagé d'aménager la cheminée et le ventilateur sur deux dispositifs amortisseurs distincts.

La cheminée 60 constitue une alvéole de l'ensemble d'alvéoles débouchantes de l'amortisseur. La cheminée présente une longueur selon la direction principale largement supérieure à celles des autres alvéoles. La cheminée, de forme sensiblement cylindrique, traverse une section circulaire de la colonne porteuse. Elle est en contact par une de ses extrémités selon la direction principale avec l'amortisseur du dispositif amortisseur avant, comme représenté sur la figure 4. La cheminée, montée traversante de la colonne porteuse, permet de supporter par gravité l'amortisseur sur la colonne porteuse. Ce support par gravité vient en complément de la fixation par collage de l'amortisseur sur la colonne porteuse.

L'amortisseur d'un dispositif amortisseur est avantageusement monobloc. L'amortisseur peut être réalisé par procédé de moulage sans tiroir. A cet effet, l'amortisseur comprend avantageusement un plan de joint sensiblement perpendiculaire à la direction principale ; la structure alvéolaire étant configurée de façon à ce que les alvéoles se referment en s'éloignant du plan de joint selon la direction principale. Notons aussi que l'amortisseur étant constitué d'un matériau souple et largement déformable, il est possible de déformer l'amortisseur lors de l'étape de démoulage. On peut donc tolérer la présence de parois de faibles dimensions qui s'opposent au démoulage selon la direction principale.

Dans l'exemple représenté par les figures, la tête comprend deux dispositifs amortisseurs. Dans cette mise en oeuvre privilégiée de l'invention, il est envisagé un robot humanoïde comprenant une tête et un corps, et dont la tête comprend :
- une colonne porteuse 20 reliée au corps du robot,
- un dispositif amortisseur avant 11 et un dispositif amortisseur arrière 12; chaque dispositif amortisseur comprenant une coquille extérieure déformable, respectivement 21 et 23, un amortisseur, respectivement 22 et 24, et une structure rigide solidaire de la colonne porteuse 20.

Les deux dispositifs amortisseurs sont placés en regard l'un de l'autre selon la direction principale et de part et d'autre de la colonne porteuse 20. Les amortisseurs des deux dispositifs amortisseurs 11 et 12 sont constitués d'une structure alvéolaire souple comprenant un ensemble d'alvéoles débouchantes selon la direction principale, et sont solidaires de la colonne porteuse 20 en une première extrémité selon la direction principale, et reliés à la coquille extérieure déformable, respectivement 21 et 23, en une seconde extrémité opposée à la première selon la direction principale. La coquille extérieure 21 du dispositif amortisseur avant 11 est également reliée directement à la colonne porteuse 20 au moyen d'au moins une fixation absorbante de type silentbloc.

L'amortisseur 24 du dispositif amortisseur arrière 12 comprend une cheminée 60 débouchante en deux extrémités selon la direction principale, permettant d'évacuer de la chaleur émise par un module électronique fixé à la colonne porteuse 20 vers l'extérieur de la tête. Le dispositif amortisseur arrière 12 comprend également un ventilateur fixé sur l'amortisseur 24, et apte à générer un flux d'air à proximité du module électronique et au travers de la cheminée 60 du dispositif amortisseur arrière 12.

L'amortisseur 22 du dispositif amortisseur avant 11 comprend deux conduits débouchants 50 et 51 permettant de guider vers l'extérieur de la tête, de la lumière émise respectivement par deux sources de lumière 56 et 57 fixées sur la colonne porteuse 20. L'amortisseur 22 comprend également au moins un conduit débouchant permettant de guider une onde sonore émise par une source sonore 58 fixée sur la colonne porteuse 20. Enfin, le dispositif amortisseur avant 11 comprend aussi au moins un microphone fixé à une paroi interne de la coquille extérieure 21.

L'invention porte d'une manière générale sur un dispositif amortisseur de chocs. Le dispositif amortisseur de choc est particulièrement adapté pour un robot mobile, comme par exemple un robot humanoïde. L'invention porte donc également sur un robot humanoïde muni d'un amortisseur de chocs ayant les caractéristiques précédemment décrites. Il est envisagé un robot dont la tête comprend un premier dispositif amortisseur disposé en partie avant de la tête, et un second dispositif amortisseur disposé en partie arrière de la tête ; les deux dispositifs amortisseurs étant placés en regard l'un de l'autre selon la direction la direction principale et de part et d'autre d'une structure rigide commune aux deux dispositifs amortisseurs.

Il est aussi envisagé un robot à caractère humanoïde dont le torse comprend un premier dispositif amortisseur disposé en partie avant du robot humanoïde, et un second dispositif amortisseur disposé en partie arrière du robot ; les deux dispositifs amortisseurs étant placés en regard l'un de l'autre selon la direction la direction principale et de part et d'autre d'une structure rigide commune aux deux dispositifs amortisseurs.

## Revendications

1. Dispositif amortisseur de chocs pour un robot mobile (1) **caractérisé en ce qu'**il comprend :
- une structure rigide (20) reliée au robot mobile (1),
- une coquille extérieure déformable (21 ; 23), et
- un amortisseur (22 ; 24) ;
- un module électronique (54) fixé sur la structure rigide (20),
l'amortisseur (22 ; 24) étant constitué d'une structure alvéolaire souple comprenant un ensemble d'alvéoles débouchantes selon une direction principale (X), et étant solidaire de la structure rigide (20) en une première extrémité selon la direction principale (X), et relié à la coquille extérieure déformable (21 ; 23) en une seconde extrémité opposée à la première selon la direction principale (X),
l'amortisseur (24) comprenant une cheminée (60) débouchante en deux extrémités selon la direction principale (X), permettant d'évacuer de la chaleur émise par le module électronique (54) vers l'extérieur du robot (1).

2. Dispositif selon la revendication 1, dans lequel la coquille extérieure (21) est également reliée directement à la structure rigide (20) au moyen d'au moins une fixation absorbante (43) de type silentbloc.

3. Dispositif selon l'une des revendications précédentes, dont l'amortisseur (22 ; 24) comprend un plan de joint sensiblement perpendiculaire à la direction principale (X); la structure alvéolaire de l'amortisseur (22 ; 24) étant configurée de façon à ce que les alvéoles se referment en s'éloignant du plan de joint selon la direction principale (X).

4. Dispositif selon l'une des revendications précédentes, dans lequel l'amortisseur (22 ; 24) est constitué d'un matériau choisi dans la liste comprenant le caoutchouc naturel, le 4-polyisoprène, le polyisoprène synthétique, le polybutadiène, le copolymère styrène-butadiène, le polyisobutylène, l'isobutylène-isoprène, le chloroprène, le néoprène, le copolymère butadiène-acrylonitrile, le copolymère éthylène-propylène, le terpolymère, le polyéther bloc amide, les thermo-plastiques élastomères, les polyuréthanes thermoplastiques, les oléfines thermoplastiques, les polysulfures, la protéine élastine, les élastomères silicone, les fluoroélastomères, les perfluoroélastomères, le copolymère éthylène-acétate de vinyle, les élastomères polyacryliques, le copolymère éthylène acrylique, le polyéthylène chlorosulfoné, les élastomères d'épichlorhydrine.

5. Dispositif selon l'une des revendications précédentes, comprenant un ventilateur (55) fixé sur l'amortisseur (24), et apte à générer un flux d'air à proximité du module électronique (54) et au travers de la cheminée (60).

6. Dispositif selon l'une des revendications précédentes, comprenant au moins une source lumineuse (56 ; 57) reliée à la structure rigide (20), et dont l'amortisseur (22) comprend un conduit débouchant (50 ; 51) configuré pour guider une lumière émise par la source lumineuse (56 ; 57) vers l'extérieur du robot (1).

7. Dispositif selon l'une des revendications précédentes, comprenant au moins une source sonore (58) reliée à la structure rigide (20), et dont l'amortisseur (22) comprend un conduit débouchant (52) configuré pour guider une onde sonore émise par la source sonore (58) vers l'extérieur du robot (1).

8. Dispositif selon l'une des revendications précédentes, comprenant au moins un microphone (53) fixé à une paroi interne de la coquille extérieure (21) et dont l'amortisseur (22) permet l'isolation phonique.

9. Robot humanoïde comprenant un dispositif amortisseur de chocs selon l'une des revendications 1 à 8.

10. Tête d'un robot humanoïde (1) comprenant un dispositif amortisseur de chocs (11 ; 12) selon l'une des revendications 1 à 8, et dont la structure rigide (20) est reliée à un tronc (2) du robot (1).

11. Tête de robot humanoïde selon la revendication 10, comprenant un premier dispositif amortisseur (11) disposé en partie avant de la tête (10), et un second dispositif amortisseur (12) disposé en partie arrière de la tête (10) ; les deux dispositifs amortisseurs (11,12) étant placés en regard l'un de l'autre selon la direction la direction principale (X) et de part et d'autre d'une structure rigide (20) commune aux deux dispositifs amortisseurs (11, 12).

12. Torse de robot humanoïde selon la revendication 9, comprenant un premier dispositif amortisseur disposé en partie avant du robot humanoïde, et un second dispositif amortisseur disposé en partie arrière du robot ; les deux dispositifs amortisseurs étant placés en regard l'un de l'autre selon la direction la direction principale (X) et de part et d'autre d'une structure rigide commune aux deux dispositifs amortisseurs.

## Patentansprüche

1. Stoßdämpfungsvorrichtung für einen mobilen Roboter (1), **dadurch gekennzeichnet, dass** sie Folgendes umfasst:
- eine starre Struktur (20), die mit dem mobilen Roboter (1) verbunden ist,
- eine verformbare Außenschale (21; 23), und
- einen Dämpfer (22; 24);
- ein elektronisches Modul (54), das an der starren Struktur (20) befestigt ist,
wobei der Dämpfer (22; 24) von einer flexiblen wabenartigen Struktur gebildet wird, die eine Wabenbaugruppe umfasst, die in einer Hauptrichtung (X) öffnet und an einem ersten Ende fest mit der starren Struktur (20) in der Hauptrichtung (X) verbunden und mit der verformbaren Außenschale (21; 23) an einem zweiten Ende gegenüber dem ersten Ende in der Hauptrichtung (X) verbunden ist,
wobei der Dämpfer (24) eine Bahn (60) umfasst, die an zwei Enden in der Hauptrichtung (X) öffnet, so dass von dem elektronischen Modul (54) emittierte Wärme zur Außenseite des Roboters (1) evakuiert werden kann.

2. Vorrichtung nach Anspruch 1, bei der die Außenschale (21) auch direkt mit der starren Struktur (20) mittels wenigstens einer absorbierenden Befestigung (43) des Silentblock-Typs verbunden ist.

3. Vorrichtung nach einem der vorherigen Ansprüche, deren Dämpfer (22; 24) eine Trennebene im Wesentlichen lotrecht zur Hauptachse (X) umfasst; wobei die Wabenstruktur des Dämpfers (22; 24) so konfiguriert ist, dass sich die Waben durch Entfernen von der Trennebene in der Hauptrichtung (X) schließen.

4. Vorrichtung nach einem der vorherigen Ansprüche, bei der der Dämpfer (22; 24) aus einem Material gebildet ist, ausgewählt aus der Liste, die Folgendes umfasst: Naturkautschuk, 4-Polyisopren, synthetisches Polyisopren, Polybutadien, StyrolButadien-Copolymer, Polyisobutylen, Isobutylen-Isopren, Chlorpren, Neopren, Butadien-Acrylnitril-Copolymer, Ethylen-Propylen-Copolymer, Terpolymer, Amidblockpolyether, thermoplastische Elastomere, thermoplastische Polyurethane, thermoplastische Olefine, Polyschwefel, Protein Elastin, Silikonelastomere, Fluorelastomere, Perfluorelastomere, Ethylen-Vinylacetat-Copolymer, Polyacrylelastomere, Ethylen-Acryl-Copolymer, Chlorsulfonpolyethylen, Epichlorhydrinelastomere.

5. Vorrichtung nach einem der vorherigen Ansprüche, die einen Ventilator (55) umfasst, der an dem Absorber (24) befestigt und in der Lage ist, einen Luftstrom in der Nähe des elektronischen Moduls (54) und über die Bahn (60) zu erzeugen.

6. Vorrichtung nach einem der vorherigen Ansprüche, die wenigstens eine Lichtquelle (56; 57) umfasst, die mit der starren Struktur (20) verbunden ist und deren Dämpfer (22) eine sich öffnende Leitung (50; 51) umfasst, konfiguriert zum Leiten eines von der Lichtquelle (56; 57) zur Außenseite des Roboters (1) emittierten Lichts.

7. Vorrichtung nach einem der vorherigen Ansprüche, die wenigstens eine Schallquelle (58) umfasst, verbunden mit der starren Struktur (20), deren Dämpfer (22) eine sich öffnende Leitung (52) umfasst, konfiguriert zum Leiten einer von der Schallquelle (58) zur Außenseite des Roboters (1) emittierten Schallwelle.

8. Vorrichtung nach einem der vorherigen Ansprüche, umfassend wenigstens ein Mikrofon (53), das an einer Innenwand der Außenschale (21) befestigt ist und deren Dämpfer (22) eine Schallisolation zulässt.

9. Humanoider Roboter, der eine Stoßdämpfungsvorrichtung nach einem der Ansprüche 1 bis 8 umfasst.

10. Kopf eines humanoiden Roboters (1), der eine Stoßdämpfungsvorrichtung (11; 12) nach einem der Ansprüche 1 bis 8 umfasst und dessen starre Struktur (20) mit einem Rumpf (2) des Roboters (1) verbunden ist.

11. Humanoider Roboterkopf nach Anspruch 10, der eine erste Dämpfungsvorrichtung (11) umfasst, die im vorderen Teil des Kopfs (10) angeordnet ist, und eine zweite Absorbervorrichtung (12), die im hinteren Teil des Kopfes (10) angeordnet ist; und wobei die beiden Dämpfungsvorrichtungen (11, 12) einander gegenüberliegend in der Hauptrichtung (X) und auf beiden Seiten einer starren Struktur (20) platziert sind, die den beiden Dämpfungsvorrichtungen (11, 12) gemeinsam ist.

12. Humanoider Robotertorso nach Anspruch 9, der eine erste Dämpfungsvorrichtung umfasst, die im vorderen Teil des humanoiden Roboters angeordnet ist, und eine zweite Dämpfungsvorrichtung, die im hinteren Teil des Roboters angeordnet ist; wobei die beiden Dämpfungsvorrichtungen einander gegenüberliegend in der Hauptrichtung (X) und auf beiden Seiten einer starren Struktur platziert sind, die den beiden Dämpfungsvorrichtungen gemeinsam ist.

## Claims

1. A shock-absorbing device for a mobile robot (1) **characterized in that** it comprises:
- a rigid structure (20) linked to the mobile robot (1),
- a deformable outer shell (21; 23), and
- a shock-absorber (22; 24);
- an electronic module (54) fixed to the rigid structure (20),
the shock-absorber (22; 24) consisting of a flexible cellular structure comprising a set of cells emerging in a main direction (X), and being secured to the rigid structure (20) at a first end in the main direction (X), and linked to the deformable outer shell (21; 23) at a second end opposite the first in the main direction (X),
the shock-absorber (24) comprising a chimney (60) emerging at both ends in the main direction (X), making it possible to discharge heat emitted by the electronic module (54) out of the robot (1).

2. The device as claimed in claim 1, in which the outer shell (21) is also linked directly to the rigid structure (20) by means of at least one absorbent fixing (43) of silent block type.

3. The device as claimed in one of the preceding claims, in which the shock-absorber (22; 24) comprises a seal plane substantially at right angles to the main direction (X); the cellular structure of the shock-absorber (22; 24) being configured in such a way that the cells close up with distance away from the seal plane in the main direction (X).

4. The device as claimed in one of the preceding claims, in which the shock-absorber (22; 24) consists of a material chosen from the list comprising natural rubber, 4-polyisoprene, synthetic polyisoprene, polybutadiene, styrene-butadiene copolymer, polyisobutylene, isobutylene-isoprene, chloroprene, neoprene, butadiene-acrylonitrile copolymer, ethylene-propylene copolymer, terpolymer, polyether block amide, elastomer thermoplastics, thermoplastic polyurethanes, thermoplastic olefins, polysulfides, elastin protein, silicone elastomers, fluoroelastomers, perfluoroelastomers, ethylene-vinyl acetate copolymer, polyacrylic elastomers, ethylene-acrylic copolymer, chlorosulfonated polyethylene, epichlorohydrin elastomers.

5. The device as claimed in one of the preceding claims, comprising a fan (55) fixed to the shock-absorber (24), and capable of generating an airflow in proximity to the electronic module (54) and through the chimney (60).

6. The device as claimed in one of the preceding claims, comprising at least one light source (56; 57) linked to the rigid structure (20), and in which the shock-absorber (22) comprises an emergent duct (50; 51) configured to guide a light emitted by the light source (56; 57) out of the robot (1).

7. The device as claimed in one of the preceding claims, comprising at least one sound source (58) linked to the rigid structure (20), and in which the shock-absorber (22) comprises an emergent duct (52) configured to guide a sound wave emitted by the sound source (58) out of the robot (1).

8. The device as claimed in one of the preceding claims, comprising at least one microphone (53) fixed to an internal wall of the outer shell (21) and in which the shock-absorber (22) allows phonic insulation.

9. A humanoid robot comprising a shock-absorbing device as claimed in one of claims 1 to 8.

10. A head of a humanoid robot (1) comprising a shock-absorbing device (11; 12) as claimed in one of claims 1 to 8, and in which the rigid structure (20) is linked to a trunk (2) of the robot (1).

11. The humanoid robot head as claimed in claim 10, comprising a first shock-absorbing device (11) arranged in the front part of the head (10), and a second shock-absorbing device (12) arranged in the rear part of the head (10); the two shock-absorbing devices (11, 12) being placed facing one another in the direction the main direction (X) and on either side of a rigid structure (20) common to both shock-absorbing devices (11, 12).

12. A torso of a humanoid robot as claimed in claim 9, comprising a first shock-absorbing device arranged in the front part of the humanoid robot, and a second shock-absorbing device arranged in the rear part of the robot; the two shock-absorbing devices being placed facing one another in the direction the main direction (X) and on either side of a rigid structure common to both shock-absorbing devices.
